# EUROPEAN PATENT APPLICATION

(11) **EP 2 209 321 A2**
(43) Date of publication of application: **21.07.2010**
(21) Application number: 10000181.7
(22) Date of filing: 11.01.2010
(51) Int. Cl.: H04N 13/00

(54) **Enabling 3D video and image processing using one full resolution video stream and one lower resolution video stream**

(30) Priority: 15.01.2009 US 144959 P; 02.12.2009 US 629247
(71) Applicant: Broadcom Corporation, Irvine, CA 92617 (US)
(72) Inventor: Macfarlane, Charles, CB6 3UP Haddenham, Gambs (GB)
(74) Representative: Jehle, Volker Armin

(57) **Abstract**

A wireless communication device including one or more processors and/or circuits may be enabled to generating an output full resolution 3D video utilizing a first video data stream generated from a high resolution video source and a second video data stream generated from a low resolution video source. The resolution of the output full resolution 3D video may be greater than first and second video data streams. 3D video or image processing on the data streams may be performed within the wireless communication device. The 3D video or image processing may be performed external to the wireless communication device. The data streams may be compressed prior to communicating them for the external 3D video or image processing. The 3D video or image may be displayed locally on the wireless communication device. The 3D video or images may be formatted for local displaying on the wireless communication device.

## Description

### CROSS-REFERENCE TO RELATED APPLICATIONS/INCORPORATION BY REFERENCE

This application makes reference to and claims priority to United States Provisional Application Serial No. 61/144,959 filed on January 15, 2009.

The above stated application is hereby incorporated herein by reference in its entirety.

### FEDERALLY SPONSORED RESEARCH OR DEVELOPMENT

[Not Applicable]

### [MICROFICHE/COPYRIGHT REFERENCE]

[Not Applicable]

### FIELD OF THE INVENTION

Certain embodiments of the invention relate to wireless communication. More specifically, certain embodiments of the invention relate to a method and system for enabling 3D video and image processing using one full resolution video stream and one lower resolution video stream.

### BACKGROUND OF THE INVENTION

In 3D or 2D video systems, an image is presented in a display device, for example in a television, a monitor and/or a gaming console. Most video broadcasts, nowadays, utilize video processing applications that enable broadcasting video images in the form of bit streams that comprise information regarding characteristics of the image to be displayed. These video applications may utilize various interpolation and/or rate conversion functions to present content comprising still and/or moving images on a display. For example, de-interlacing functions may be utilized to convert moving and/or still images to a format that is suitable for certain types of display devices that are unable to handle interlaced content.

Interlaced 3D and/or 2D video comprises fields, each of which may be captured at a distinct time interval. A frame may comprise a pair of fields, for example, a top field and a bottom field. The pictures forming the video may comprise a plurality of ordered lines. During one of the time intervals, video content for the even-numbered lines may be captured. During a subsequent time interval, video content for the odd-numbered lines may be captured. The even-numbered lines may be collectively referred to as the top field, while the odd-numbered lines may be collectively referred to as the bottom field. Alternatively, the odd-numbered lines may be collectively referred to as the top field, while the even-numbered lines may be collectively referred to as the bottom field.

In the case of progressive 2D and/or 3D video frames, all the lines of the frame may be captured or played in sequence during one time interval. Interlaced video may comprise fields that were converted from progressive frames. For example, a progressive frame may be converted into two interlaced fields by organizing the even numbered lines into one field and the odd numbered lines into another field.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A system and/or method for enabling 3D video and image processing using one full resolution video stream and one lower resolution video stream, substantially as shown in and/or described in connection with at least one of the figures, as set forth more completely in the claims.
According to an aspect, a method for enabling wireless communication comprises:
performing by one or more processors and/or circuits in a single video processing device:
   generating an output full resolution 3D video utilizing a first video data stream generated from a high resolution video source and a second video data stream generated from a low resolution video source, wherein a resolution of said output full resolution 3D video is greater than a resolution of said first video data stream and said second video data stream.
Advantageously, the method further comprises generating left view video for said full resolution 3D video utilizing information from one or both of said first video data stream and said second video data stream.
Advantageously, the method further comprises generating right view video for said full resolution 3D video utilizing information from one or both of said first video data stream and said second video data stream.
Advantageously, the method further comprises compressing said generated output full resolution 3D video.
Advantageously, the method further comprises communicating said compressed generated output full resolution 3D video to a device external to said wireless communication device for processing.
Advantageously, said device external to said wireless communication device decompresses said compressed generated output full resolution 3D video.
Advantageously, said device external to said wireless communication device processes and displays said decompressed generated output full resolution 3D video.
Advantageously, the method further comprises formatting said output full resolution 3D video for local display by said wireless communication device
Advantageously, the method further comprises displaying said formatted output full resolution 3D video by said wireless communication device.
Advantageously, one or more of said output full resolution 3D video, said first video data stream, and/or said second video data stream comprises still and/or moving images.
According to an aspect, a system for enabling wireless communication comprises:
one or more processors and/or circuits for use in a video processing device, said one or more processors and/or circuits are operable to:
   generate an output full resolution 3D video utilizing a first video data stream generated from a high resolution video source and a second video data stream generated from a low resolution video source, wherein a resolution of said output full resolution 3D video is greater than a resolution of said first video data stream and said second video data stream.
Advantageously, said one or more processors and/or circuits are operable to generate left view video for said full resolution 3D video utilizing information from one or both of said first video data stream and said second video data stream.
Advantageously, said one or more processors and/or circuits are operable to generate right view video for said full resolution 3D video utilizing information from one or both of said first video data stream and said second video data stream.
Advantageously, said one or more processors and/or circuits are operable to compress said generated output full resolution 3D video.
Advantageously, said one or more processors and/or circuits are operable to communicate said compressed generated output full resolution 3D video to a device external to said wireless communication device for processing.
Advantageously, said device external to said wireless communication device decompresses said compressed generated output full resolution 3D video.
Advantageously, said device external to said wireless communication device processes and displays said decompressed generated output full resolution 3D video.
Advantageously, said one or more processors and/or circuits are operable to format said output full resolution 3D video for local display by said wireless communication device.
Advantageously, said one or more processors and/or circuits are operable to display said formatted output full resolution 3D video by said wireless communication device.
Advantageously, one or more of said output full resolution 3D video, said first video data stream, and/or said second video data stream comprises still and/or moving images.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a block diagram of an exemplary wireless system that is operable to provide 3D video and image processing using one full resolution video stream and one lower resolution video stream, in accordance with an embodiment of the invention.

FIG. 1B is a block diagram illustrating exemplary 3D video capture, in accordance with an embodiment of the invention.

FIG. 2 is a block diagram illustrating an exemplary 3D video capture and processing sequence, in accordance with an embodiment of the invention.

FIG. 3 is a diagram illustrating exemplary 3D video implementation, in accordance with an embodiment of the invention.

FIG. 4 is a diagram illustrating exemplary networked 3D video implementation, in accordance with an embodiment of the invention.

FIG. 5 is a block diagram illustrating exemplary steps for enabling 3D video and image processing using one full resolution video stream and one lower resolution video stream, in accordance with an embodiment of the invention.

### DETAILED DESCRIPTION OF THE INVENTION

Certain aspects of the invention may be found in a method and system for enabling 3D video and image processing using one full resolution video stream and one lower resolution video stream. In various exemplary aspects of the invention, an output full resolution 3D video may be generated utilizing a first video data stream generated from a high resolution video source and a second video data stream generated from a low resolution video source, wherein a resolution of the output full resolution 3D video is greater than a resolution of the first video data stream and the second video data stream. In one embodiment of the invention, 3D video or image processing on the data streams may be performed within the wireless communication device. In another embodiment of the invention, the 3D video or image processing may be performed external to the wireless communication device. The data streams may be compressed prior to communicating them for the external 3D video or image processing. The 3D video or images may be displayed locally on the wireless communication device. The 3D video or images may be formatted so that they may be locally presented on a display of the wireless communication device.

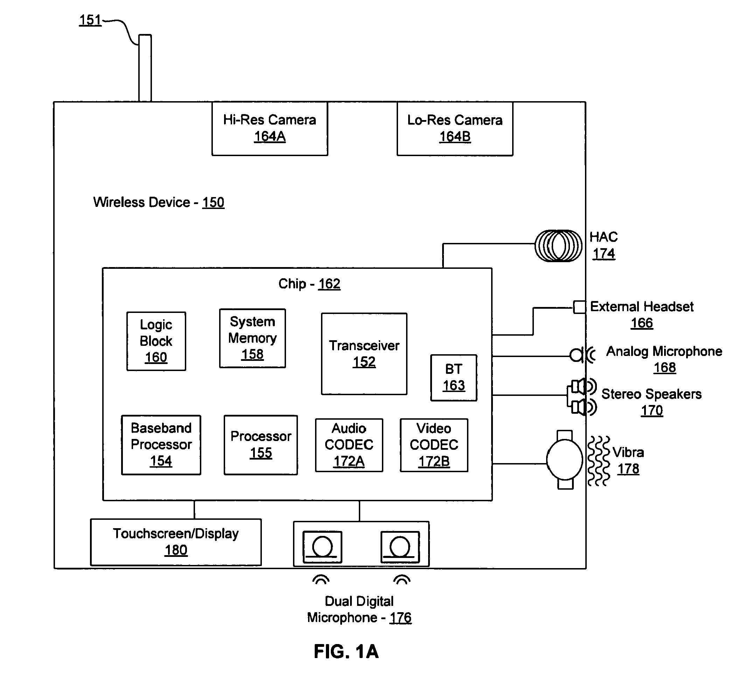

FIG. 1A is a block diagram of an exemplary wireless system that is operable to provide 3D video and image processing using one full resolution video stream and one lower resolution video stream, in accordance with an embodiment of the invention. Referring to FIG. 1A, the wireless device 150 may comprise an antenna 151, a chip 162, a transceiver 152, a baseband processor 154, a processor 155, a system memory 158, a logic block 160, a high resolution camera 164A, a low resolution camera 164B, an audio CODEC 172A, a video CODEC 172B, and an external headset port 166. The wireless device 150 may also comprise an analog microphone 168, integrated hands-free (IHF) stereo speakers 170, a hearing aid compatible (HAC) coil 174, a dual digital microphone 176, a vibration transducer 178, and a touchscreen/display 180.

Most video content is currently generated and played in two-dimensional (2D) format. In various video related applications such as, for example, DVD/Blu-ray movies and/or digital TV, 3D video may be more desirable because it may be more realistic to humans to perceive 3D rather than 2D images.

The transceiver 152 may comprise suitable logic, circuitry, interfaces, and/or code that may be enabled to modulate and upconvert baseband signals to RF signals for transmission by one or more antennas, which may be represented generically by the antenna 151. The transceiver 152 may also be enabled to downconvert and demodulate received RF signals to baseband signals. The RF signals may be received by one or more antennas, which may be represented generically by the antenna 151. Different wireless systems may use different antennas for transmission and reception. The transceiver 152 may be enabled to execute other functions, for example, filtering the baseband and/or RF signals, and/or amplifying the baseband and/or RF signals. Although a single transceiver on each chip is shown, the invention is not so limited. Accordingly, the transceiver 152 may be implemented as a separate transmitter and a separate receiver. In addition, there may be a plurality of transceivers, transmitters and/or receivers. In this regard, the plurality of transceivers, transmitters and/or receivers may enable the wireless device 150 to handle a plurality of wireless protocols and/or standards including cellular, WLAN and PAN. Wireless technologies handled by the wireless device 150 may comprise GPS, GALILEO, GLONASS, GSM, CDMA, CDMA2000, WCDMA, GNSS, GMS, GPRS, EDGE, WIMAX, WLAN, LTE, 3GPP, UMTS, BLUETOOTH, and ZIGBEE, for example.

The baseband processor 154 may comprise suitable logic, circuitry, interfaces, and/or code that may be enabled to process baseband signals for transmission via the transceiver 152 and/or the baseband signals received from the transceiver 152. The processor 155 may be any suitable processor or controller such as a CPU, DSP, ARM, or any type of integrated circuit processor. The processor 155 may comprise suitable logic, circuitry, and/or code that may be enabled to control the operations of the transceiver 152 and/or the baseband processor 154. For example, the processor 155 may be utilized to update and/or modify programmable parameters and/or values in a plurality of components, devices, and/or processing elements in the transceiver 152 and/or the baseband processor 154. At least a portion of the programmable parameters may be stored in the system memory 158.

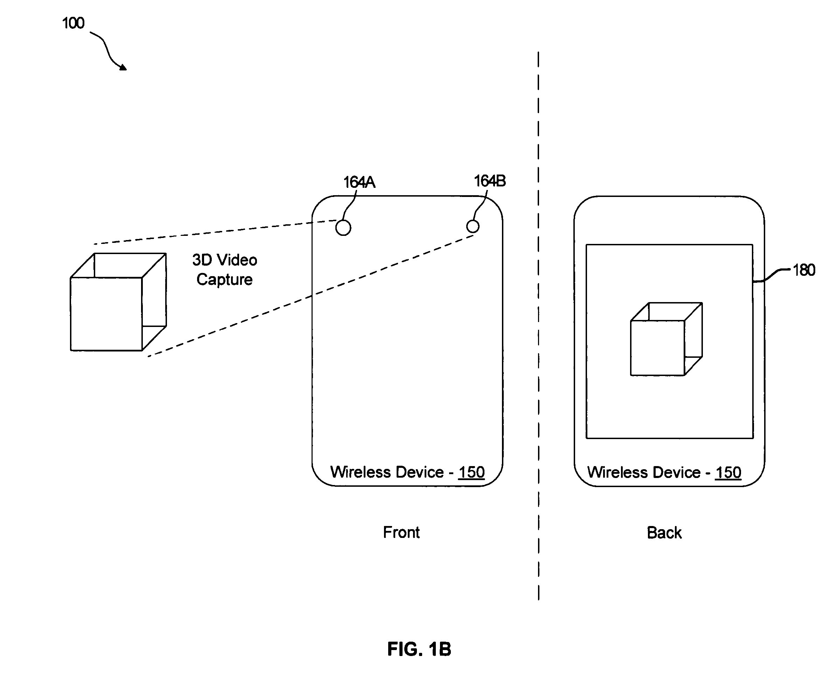

Control and/or data information, which may comprise the programmable parameters, may be transferred from other portions of the wireless device 150, not shown in FIG. 1, to the processor 155. Similarly, the processor 155 may be enabled to transfer control and/or data information, which may include the programmable parameters, to other portions of the wireless device 150, not shown in FIG. 1, which may be part of the wireless device 150.

The processor 155 may utilize the received control and/or data information, which may comprise the programmable parameters or video source data, to determine an operating mode of the transceiver 152. For example, the processor 155 may be utilized to select a specific frequency for a local oscillator, a specific gain for a variable gain amplifier, configure the local oscillator and/or configure the variable gain amplifier for operation in accordance with various embodiments of the invention. Moreover, the received video source data and/or processed full-resolution 3D video data, may be stored in the system memory 158 via the processor 155, for example. The information stored in system memory 158 may be transferred to the transceiver 152 from the system memory 158 via the processor 155.

The processor 155 may be operable to process received video data streams from a high resolution video source and a low resolution video source. The processor 155 may thereby generate a full resolution 3D video from the received data streams

The system memory 158 may comprise suitable logic, circuitry, interfaces, and/or code that may be enabled to store a plurality of control and/or video data information, including video or image processing parameters, or full resolution 3D video data. The system memory 158 may store at least a portion of the programmable parameters that may be manipulated by the processor 155.

The logic block 160 may comprise suitable logic, circuitry, interfaces, and/or code that may enable controlling of various functionalities of the wireless device 150. For example, the logic block 160 may comprise one or more state machines that may generate signals to control the transceiver 152 and/or the baseband processor 154. The logic block 160 may also comprise registers that may hold data for controlling, for example, the transceiver 152 and/or the baseband processor 154. The logic block 160 may also generate and/or store status information that may be read by, for example, the processor 155. Amplifier gains and/or filtering characteristics, for example, may be controlled by the logic block 160.

The BT radio/processor 163 may comprise suitable circuitry, logic, interfaces, and/or code that may enable transmission and reception of Bluetooth signals. The BT radio/processor 163 may enable processing and/or handling of BT baseband signals. In this regard, the BT radio/processor 163 may process or handle BT signals received and/or BT signals transmitted via a wireless communication medium. The BT radio/processor 163 may also provide control and/or feedback information to/from the baseband processor 154 and/or the processor 155, based on information from the processed BT signals. The BT radio/processor 163 may communicate information and/or data from the processed BT signals to the processor 155 and/or to the system memory 158. Moreover, the BT radio/processor 163 may receive information from the processor 155 and/or the system memory 158, which may be processed and transmitted via the wireless communication medium a Bluetooth headset, for example.

The high-resolution camera 164A may comprise suitable logic, circuitry, interfaces, and/or code that may be operable to capture video and images. The high-resolution camera 164A may be capable of capturing high-definition images and video and may be controlled via the processor 155, for example. The high-resolution camera 164A may comprise multi-megapixels, for example.

The low-resolution camera 164B may comprise suitable logic, circuitry, interfaces, and/or code that may be operable to capture video and images. The low-resolution camera 164B may comprise a smaller, lower-cost camera than the high-resolution camera 164A, and may comprise a VGA image/video camera, for example. In this manner, the wireless device 150 may comprise two cameras for full resolution 3D images and video, without the need for two high-resolution cameras. The 3D image and/or video may be displayed on the touchscreen/display 180, for example, may be stored in the system memory 158, and/or may be communicated externally via the transceiver 152 and the antenna 151.

The audio CODEC 172A may comprise suitable circuitry, logic, interfaces, and/or code that may process audio signals received from and/or communicated to input/output devices. The input devices may be within or communicatively coupled to the wireless device 150, and may comprise the analog microphone 168, the stereo speakers 170, the hearing aid compatible (HAC) coil 174, the dual digital microphone 176, and the vibration transducer 178, for example. The audio CODEC 172A may be operable to up-convert and/or down-convert signal frequencies to desired frequencies for processing and/or transmission via an output device.

The video CODEC 172B may comprise suitable circuitry, logic, interfaces, and/or code that may be operable to process video signals received and/or communicated from and/or to input output devices, such as the high-resolution camera 164A and the low-resolution camera 164B. The video CODEC 172B may communicate processed video signals to the processor 155 for further processing, or for communication to devices external to the wireless device 150 via the transceiver 152.

The chip 162 may comprise an integrated circuit with multiple functional blocks integrated within, such as the transceiver 152, the baseband processor 154, the BT radio/processor 163, the audio CODEC 172A, and the video CODEC 172B. The number of functional blocks integrated in the chip 162 is not limited to the number shown in FIG. 1. Accordingly, any number of blocks may be integrated on the chip 162, including cameras such as the high-resolution camera 164A and the low-resolution camera 164B, depending on chip space and wireless device 150 requirements, for example.

The external headset port 166 may comprise a physical connection for an external headset to be communicatively coupled to the wireless device 150. The analog microphone 168 may comprise suitable circuitry, logic, and/or code that may detect sound waves and convert them to electrical signals via a piezoelectric effect, for example. The electrical signals generated by the analog microphone 168 may comprise analog signals that may require analog to digital conversion before processing.

The stereo speakers 170 may comprise a pair of speakers that may be operable to generate audio signals from electrical signals received from the audio CODEC 172A. The HAC coil 174 may comprise suitable circuitry, logic, and/or code that may enable communication between the wireless device 150 and a T-coil in a hearing aid, for example. In this manner, electrical audio signals may be communicated to a user that utilizes a hearing aid, without the need for generating sound signals via a speaker, such as the stereo speakers 170, and converting the generated sound signals back to electrical signals in a hearing aid, and subsequently back into amplified sound signals in the user's ear, for example.

The dual digital microphone 176 may comprise suitable circuitry, logic, and/or code that may be operable to detect sound waves and convert them to electrical signals. The electrical signals generated by the dual digital microphone 176 may comprise digital signals, and thus may not require analog to digital conversion prior to digital processing in the audio CODEC 172A. The dual digital microphone 176 may enable beamforming capabilities, for example.

The vibration transducer 178 may comprise suitable circuitry, logic, and/or code that may enable notification of an incoming call, alerts and/or message to the wireless device 150 without the use of sound. The vibration transducer may generate vibrations that may be in synch with, for example, audio signals such as speech or music.

In operation, video stream data may be communicated from image and/or video sources, such as the high-resolution camera 164A and the low-resolution camera 164B to the video CODEC 172B. The video CODEC 172B may process the received video data before communicating the data to the processor for further processing or communication to a device external to the wireless device 150.

In an embodiment of the invention, the high-resolution camera 164A and the low-resolution camera 164B may be operable to capture images and/or video. By utilizing two spatially separated cameras, a 3D image/video may be generated from the two image/video signals. The high-resolution camera 164A and the low-resolution camera 164B may communicate video data streams to the video CODEC 172B and process the received signals before communicating the processed signals to the processor for further processing. The processor 155 may be operable to process 3D video and/or images obtained utilizing the high-resolution camera 164A and the low-resolution camera 164B. In this manner, space and cost of the wireless device 150 may be reduced by utilizing a smaller, lower-cost, lower-resolution camera with a high-resolution camera, while still supporting full-resolution 3D images and video. The processing performed by the processor 155 may comprise right and left-view generation to enable 3D video, which may comprise still and/or moving images.

Various methodologies may be utilized to capture, generate (at capture or playtime), and/or render 3D video images. One of the more common methods for implementing 3D video is stereoscopic 3D video. In stereoscopic 3D video based applications the 3D video impression is generated by rendering multiple views, most commonly two views: a left view and a right view, corresponding to the viewer's left eye and right eye to give depth to displayed images. In this regard, left view and right view video sequences may be captured and/or processed to enable creating 3D images. The left view and right view data may then be communicated either as separate streams, or may be combined into a single transport stream and only separated into different view sequences by the end-user receiving/displaying device.

Various compression/encoding standards may be utilized to enable compressing and/or encoding of the view sequences into transport streams during communication of stereoscopic 3D video. For example, the separate left and right view video sequences may be compressed based on MPEG-2 MVP, H.264 and/or MPEG-4 advanced video coding (AVC) or MPEG-4 multi-view video coding (MVC).

In an embodiment of the invention, 3D video and image processing may be achieved utilizing one full resolution video stream and one lower resolution video stream. In this regard, a wireless device 150 comprising one or more processors and/or circuits may be enabled to generate an output full resolution 3D video utilizing a first video data stream generated from a high resolution video source and a second video data stream generated from a low resolution video source. A resolution of the output full resolution 3D video is greater than a resolution of the first video data stream and the second video data stream. 3D video or image processing on the data streams may be performed within the wireless communication device 150 and/or external to the wireless communication device 150.

FIG. 1B is a block diagram illustrating exemplary 3D video capture, in accordance with an embodiment of the invention. Referring to FIG. 1B, there is shown the wireless device 150 and the touchscreen/display 180, which may be as described with respect to FIG. 1A.

In operation, the high-resolution camera 164A and the low-resolution camera 164B in the wireless device 150 may be operable to capture images and/or video. By utilizing two spatially separated cameras, a 3D image/video may be generated from the two image/video signals, and by utilizing a lower-resolution camera in concert with a high-resolution camera, full high definition 3D images and/or video may be generated, while reducing cost and space requirements of the wireless device 150.

The captured images and/or video may be processed in the wireless device 150 and may subsequently be displayed on the touchscreen/display 180. In another embodiment of the invention, the processed images and/or video may be communicated external to the wireless device 150. Alternatively, the captured images and/or video may be communicated from the wireless device 150 without processing, before being processed by an external device. In this manner, processor requirements in the wireless device 150 may be reduced.

In various embodiments of the invention, a wireless device 150 comprising one or more processors and/or circuits may be operable to generate an output full resolution 3D video utilizing a first video data stream generated from a high resolution video source and a second video data stream generated from a low resolution video source. A resolution of the output full resolution 3D video is greater than a resolution of the first video data stream and the second video data stream. 3D video or image processing on the data streams may be performed within the wireless communication device 150 and/or external to the wireless communication device 150.

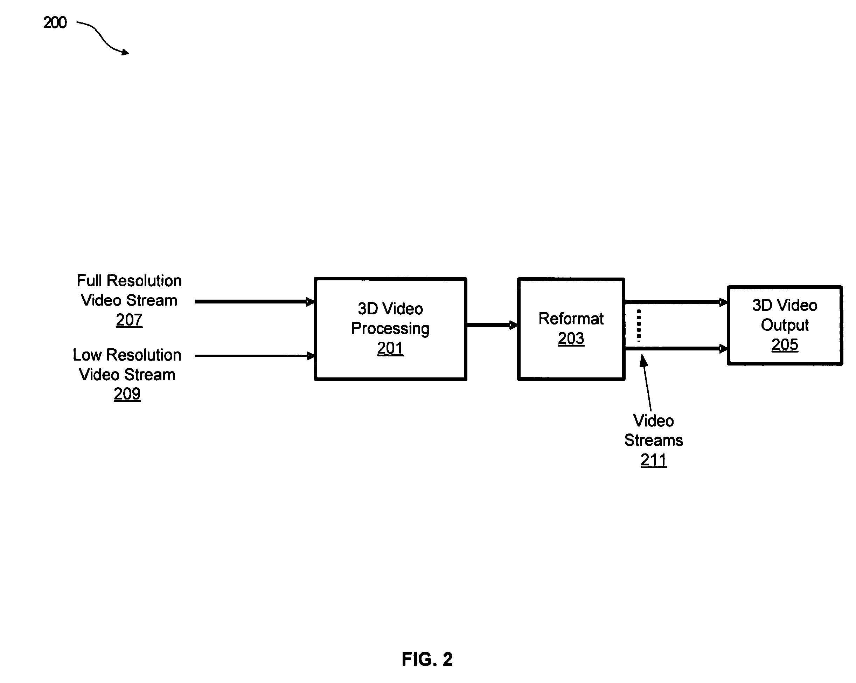

FIG. 2 is a block diagram illustrating an exemplary 3D video capture and processing sequence, in accordance with an embodiment of the invention. Referring to FIG. 2, there is shown a 3D video processing module 201, a reformat module 203, and a 3D video output 205. There is also shown a full resolution video stream 207, a low resolution stream 209, and a plurality of video streams 211.

The 3D video processing module 201 may comprise suitable logic, circuitry, interfaces, and/or code that may be operable to process received video streams, such as the full resolution video stream 207 and the low resolution stream 209. The 3D video processing module 201 may be integrated in the wireless device 150, such as in the processor 155, for example, or may be in an external device, such as a computer or audio/visual system that is operable to receive and process video streams. In instances where the 3D video processing module 201 is external to the wireless device 150, the full resolution video stream 207 and the lower resolution stream 209 may be communicated to the external device in parallel.

The reformat module 203 may comprise suitable logic, circuitry, interfaces, and/or code that may be operable to format processed 3D image or video data into a plurality of video streams 211. The reformat module 203 may format image and/or video data to the appropriate format for a target video output device.

The 3D video output 205 may comprise suitable logic, circuitry, interfaces, and/or code that may be operable to display 3D images and/or video. The 3D video output 205 may comprise a high-definition television, for example.

In operation, two cameras, such as the high resolution camera 164A and the low-resolution camera 164B, may generate two input streams, the full resolution video stream 207 and the low resolution stream 209. The full resolution stream 207 may comprise a stream of full resolution required for target compression or for LCD resolution. The low resolution stream 209 may comprise a reduced resolution stream, such as a VGA video stream, for example. The streams may be communicated to the 3D video processing module 201 which may combine the two streams to generate a full-resolution 3D video stream. In an embodiment of the invention, this process may be applied to video or still images.

The 3D video stream generated by the 3D video processing module 201 may be communicated to the reformat module 203, which may be operable to format the processed 3D video stream into a plurality of video streams 211. The plurality of video streams 211 may be communicated to the 3D video output 205 for display.

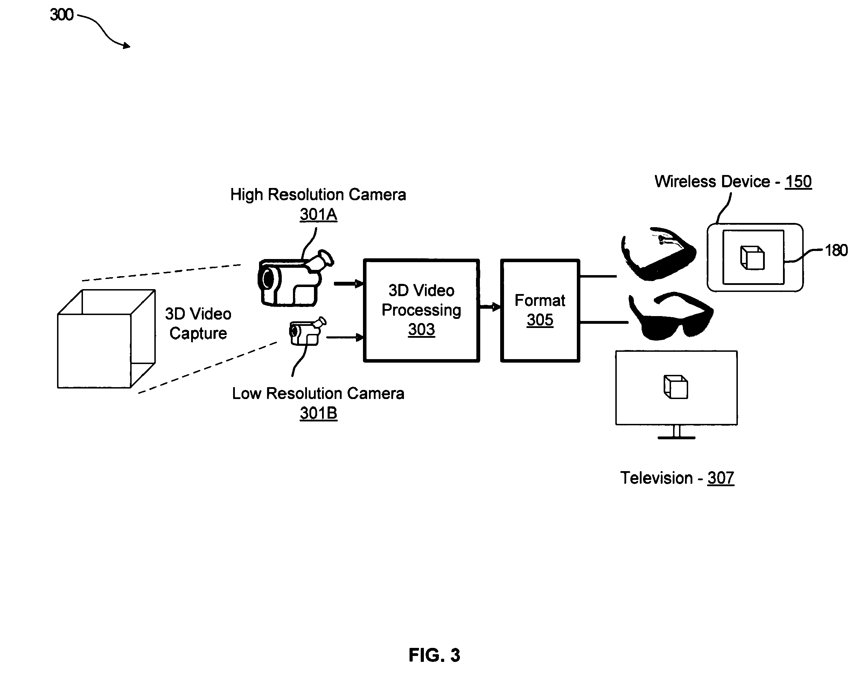

FIG. 3 is a diagram illustrating exemplary 3D video implementation, in accordance with an embodiment of the invention. Referring to FIG. 3, there is shown a 3D video implementation 300 comprising a high resolution camera 301A, a low resolution video camera 301 B, a 3D processing module 303, a format module 305, a television 307, the wireless device 150 and the touchscreen/display 180. The high resolution camera 301 A and the low resolution video camera 301 B may be substantially similar to the high-resolution camera 164A and the low-resolution camera 164B described with respect to FIG. 1A, and the and the 3D processing module 303 may be substantially similar to the 3D processing module 201 described with respect to FIG. 2. The wireless device 150, and the touchscreen/display 180 may be as described with respect to FIG. 1A.

The format module 305 may comprise suitable logic, circuitry, interfaces, and/or code that may be operable to format video and/or image data for a desired display type. For example, the format module 305 may define an appropriate aspect ratio or scan rate as required by the wireless device 150 or the television 307.

In operation, the high-resolution camera 301A and the low-resolution camera 301 B, may generate two input streams to be communicated to the 3D video processing module 303 which may combine the two streams to generate a full-resolution 3D video stream. In an embodiment of the invention, this process may be applied to video or still images. The 3D video stream generated by the 3D video processing module 301 may be communicated to the format module 305, which may be operable to format the processed 3D video stream into the appropriate format for display on the wireless device 150, the television 307, or similar display device.

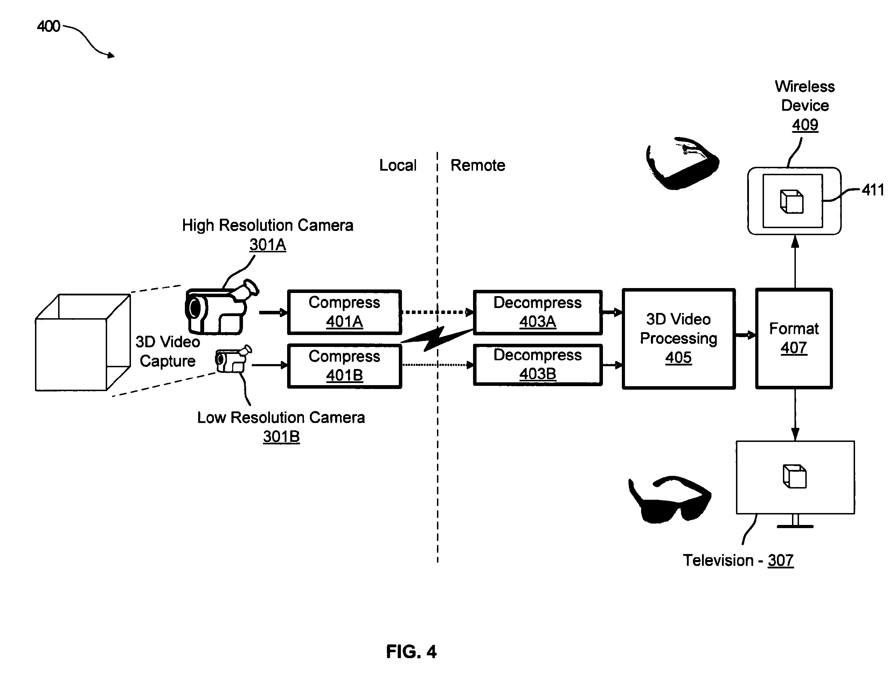

FIG. 4 is a diagram illustrating exemplary networked 3D video implementation, in accordance with an embodiment of the invention. Referring to FIG. 4, there is shown a networked 3D video implementation 400 comprising the high resolution camera 301A, the low resolution video camera 301 B, compression modules 401A and 401 B, decompression modules 403A and 403B, a 3D video processing module 405, a format module 407, the wireless device 150, and the television 307. The high resolution camera 301A, the low resolution video camera 301 B, the wireless device 150, and the television 307 may be as described previously. The 3D video processing module 405, the format module 407, and the wireless device 409 may be substantially similar to the 3D video processing module 303, the format module 305, and the wireless device 150 described previously. The wireless device 409 may comprise a touchscreen/display 411.

The compression modules 401A and 401 B may comprise suitable logic, circuitry, interfaces, and/or code that may be operable to compress received image and/or video data for subsequent communication to remote devices. For example, the compression modules 401A and 401 B may be integrated in a wireless device, such as the wireless device 150, and may enable more efficient communication of data over a network by reducing data size.

The decompression modules 403A and 403B may comprise suitable logic, circuitry, interfaces, and/or code that may be operable to decompress received compressed data. The decompression modules 403A and 403B may be remote from the image/video data source.

In operation, the high-resolution camera 301A and the low-resolution camera 301 B, may generate two input streams to be communicated to the compression modules 401A and 401B, where the data streams may be compressed for more efficient communication. The compressed streams may be communicated to a remote device comprising the decompression modules 403A and 403B, which may be enabled to decompress the received data for further processing.

The decompressed data may be communicated to the 3D video processing module 405 which may combine the two streams to generate a full-resolution 3D video stream. In an embodiment of the invention, this process may be applied to video or still images. The 3D video stream generated by the 3D video processing module 405 may be communicated to the format module 407, which may be operable to format the processed 3D video stream into the appropriate format for display on the wireless device 409, the television 307, or a similar display device.

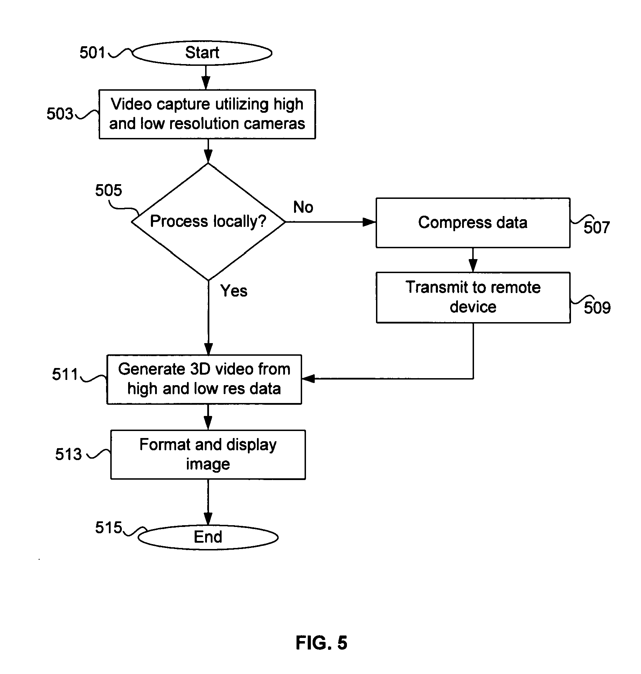

FIG. 5 is a block diagram illustrating exemplary steps for enabling 3D video and image processing using one full resolution video stream and one lower resolution video stream, in accordance with an embodiment of the invention. Referring to FIG. 5, in step 503 after start step 501, video and/or image data may be captured utilizing a high-resolution camera and a low-resolution camera. If in step 505, the video/image data is to be processed locally, such as within the wireless device 150, the exemplary steps may proceed to step 511, where the data streams may be combined and processed to generate full-resolution 3D video/images. If in step 505, the data is not to be processed locally, the data streams may be compressed in step 507, followed by step 509 where the compressed data may be communicated to a remote device, before the exemplary steps proceed to step 511, where the data streams may be combined and processed to generate full-resolution 3D video/images. The process may then proceed to step 513 where the 3D video/images may be formatted for a desired display device and subsequently displayed on that device, followed by end step 515.

In an embodiment of the invention, a method and system are disclosed for enabling 3D video and image processing using one full resolution video stream and one lower resolution video stream. In this regard, a wireless device comprising one or more processors and/or circuits may be enabled to generate an output full resolution 3D video utilizing a first video data stream 207 generated from a high resolution video source 164A and a second video data stream 209 generated from a low resolution video source 164B, wherein a resolution of the output full resolution 3D video is greater than a resolution of the first video data stream and the second video data stream. 3D video or image processing on the data streams 207/209 may be performed within the wireless communication device 150. The 3D video or image processing 201/303 may be performed external to the wireless communication device 150. The data streams 207/209 may be compressed 401A/401B prior to communicating them for the external 3D video or image processing 405. The 3D video or image may be displayed locally on the wireless communication device 150. The 3D video or images may be formatted for local displaying 180 on the wireless communication device 150.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for enabling 3D video and image processing using one full resolution video stream and one lower resolution video stream.

Accordingly, aspects of the invention may be realized in hardware, software, firmware or a combination thereof. The invention may be realized in a centralized fashion in at least one computer system or in a distributed fashion where different elements are spread across several interconnected computer systems. Any kind of computer system or other apparatus adapted for carrying out the methods described herein is suited. A typical combination of hardware, software and firmware may be a general-purpose computer system with a computer program that, when being loaded and executed, controls the computer system such that it carries out the methods described herein.

One embodiment of the present invention may be implemented as a board level product, as a single chip, application specific integrated circuit (ASIC), or with varying levels integrated on a single chip with other portions of the system as separate components. The degree of integration of the system will primarily be determined by speed and cost considerations. Because of the sophisticated nature of modern processors, it is possible to utilize a commercially available processor, which may be implemented external to an ASIC implementation of the present system. Alternatively, if the processor is available as an ASIC core or logic block, then the commercially available processor may be implemented as part of an ASIC device with various functions implemented as firmware.

The present invention may also be embedded in a computer program product, which comprises all the features enabling the implementation of the methods described herein, and which when loaded in a computer system is able to carry out these methods. Computer program in the present context may mean, for example, any expression, in any language, code or notation, of a set of instructions intended to cause a system having an information processing capability to perform a particular function either directly or after either or both of the following: a) conversion to another language, code or notation; b) reproduction in a different material form. However, other meanings of computer program within the understanding of those skilled in the art are also contemplated by the present invention.

While the invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims.

## Claims

1. A method for enabling wireless communication, the method comprising:
performing by one or more processors and/or circuits in a single video processing device:
generating an output full resolution 3D video utilizing a first video data stream generated from a high resolution video source and a second video data stream generated from a low resolution video source, wherein a resolution of said output full resolution 3D video is greater than a resolution of said first video data stream and said second video data stream.

2. The method according to claim 1, comprising generating left view video for said full resolution 3D video utilizing information from one or both of said first video data stream and said second video data stream.

3. The method according to claim 1, comprising generating right view video for said full resolution 3D video utilizing information from one or both of said first video data stream and said second video data stream.

4. The method according to claim 1, comprising compressing said generated output full resolution 3D video.

5. The method according to claim 4, comprising communicating said compressed generated output full resolution 3D video to a device external to said wireless communication device for processing.

6. The method according to claim 5, wherein said device external to said wireless communication device decompresses said compressed generated output full resolution 3D video.

7. The method according to claim 6, wherein said device external to said wireless communication device processes and displays said decompressed generated output full resolution 3D video.

8. A system for enabling wireless communication, the system comprising:
one or more processors and/or circuits for use in a video processing device, said one or more processors and/or circuits are operable to:
generate an output full resolution 3D video utilizing a first video data stream generated from a high resolution video source and a second video data stream generated from a low resolution video source, wherein a resolution of said output full resolution 3D video is greater than a resolution of said first video data stream and said second video data stream.

9. The system according to claim 8, wherein said one or more processors and/or circuits are operable to generate left view video for said full resolution 3D video utilizing information from one or both of said first video data stream and said second video data stream.

10. The system according to claim 8, wherein said one or more processors and/or circuits are operable to generate right view video for said full resolution 3D video utilizing information from one or both of said first video data stream and said second video data stream.
